# EUROPÄISCHE PATENTSCHRIFT

(11) **EP 1 787 757 B1**
(45) Veröffentlichungstag und Bekanntmachung des Hinweises auf die Patenterteilung: **28.05.2008**
(21) Anmeldenummer: 05025222.0
(22) Anmeldetag: 18.11.2005
(51) Int. Cl.: B25B 23/14, B23B 45/00, F16H 35/10

(54) **Elektromotorisch angetriebenes Schraub-oder Bohrwerkzeuggerät mit Planetengetriebe**
Electric motor driven screwdriver or drill with planetary gear train
Tournevis ou perceuse à moteur électrique avec engrenage planétaire

(43) Veröffentlichungstag der Anmeldung: 23.05.2007
(73) Patentinhaber: Metabowerke GmbH, 72622 Nürtingen (DE)
(72) Erfinder: Maier, Christoph, 73274 Notzingen (DE); Baumann, Martin, 73728 Esslingen (DE)
(74) Vertreter: Dreiss, Fuhlendorf, Steimle & Becker

(56) Entgegenhaltungen:
- EP-A- 1 391 269
- DE-A1- 3 636 301
- US-A- 4 448 098

## Beschreibung

Die vorliegende Erfindung betrifft ein elektromotorisch angetriebenes Schraub- oder Bohrwerkzeuggerät mit Planetengetriebe gemäß Oberbegriff des Anspruch 1.

Ein solches Schraubwerkzeuggerät ist aus der DE 36 36 301 A1 bekannt. Die Drehmomenteinstelleinrichtung weist einen Überlastring auf, der eine in Umfangsrichtung erstreckte Blattfeder gegen einen Rastkörper vorspannt. Die Blattfeder ist dabei in mehrere Bereiche unterteilt und weist in einem abgewickelten Zustand einen rechteckigen Querschnitt auf.

Ein weiteres Schraubwerkzeuggerät ist bekannt aus EP 1 391 269 A2. Die mehreren Rastkörper werden bei diesem bekannten Schraubwerkzeuggerät über eine Schrägflächenanordnung an einem Stützring nach radial innen in Vertiefungen des Hohlrads gedrückt. Der Stützring ist über Schraubenfedern in axialer Richtung vorgespannt. Durch die Schrägflächenanordnung wird diese axiale Vorspannung in eine nach radial innen gerichtete Komponente umgelenkt. Zum Verstellen des maximalen Drehmoments wird ein Stellring und mit diesem der Stützring verdreht, so dass ein andere Neigung der Schrägflächenanordnung mit den Rastkörpern zusammenwirkt, so dass sich eine andere radiale Kraftkomponente ergibt, bei der die Kugeln die Schrägflächenanordnung und den Stützring entgegen der Federkraft verdrängen. Zum Verstellen dieses maximalen Drehmoments muss vom Benutzer eine Stellbewegung entgegen der Federkraft aufgebracht werden, was als nachteilig angesehen wird.

Aus US 4,448,098 ist ein elektromotorisch angetriebenes Schraubwerkzeuggerät ebenfalls mit Planetengetriebeeinrichtung und einer Drehmomenteinstelleinrichtung bekannt. Bei dieser Drehmomenteinstelleinrichtung ist ein einziger nach radial innen federvorgespannter Rastkörper vorgesehen, der bei Antriebskopplung ein Hohlrad gehäusefest arretiert. Der einzige Rastkörper ist über eine in axialer Richtung erstreckte Blattfeder vorgespannt, wobei die Vorspannung der Blattfeder über einen Schieber verstellt werden kann, der hierfür ebenfalls in axialer Richtung bewegbar ist. Daher erfordert die Drehmomenteinstelleinrichtung einen beträchtlichen axialen Bauraum, was als nachteilig anzusehen ist. Weiter erweist es sich als nachteilig, dass bei dem bekannten Schraubwerkzeuggerät eine Fixierung des Hohlrads gegenüber dem Gehäuse nur durch einen einzigen Rastkörper erreichbar ist, der hierfür entsprechend große Klemmkräfte aufnehmen und übertragen muss, was den Verschleiß erhöht.

Der vorliegenden Erfindung liegt die Aufgabe zugrunde, ein Schraubwerkzeuggerät der eingangs genannten Art weiter zu verbessern, wobei es komfortabel bedienbar ist, einen geringen Bauraum beansprucht und verschleißbeständig ist.

Diese Aufgabe wird bei einem Schraubwerkzeuggerät der genannten Art erfindungsgemäß dadurch gelöst, dass die Blattfeder eine trapezförmige Abwicklung aufweist.

Dadurch, dass jedem Rastkörper eine in Umfangsrichtung erstreckte Blattfeder zugeordnet ist, lässt sich einerseits ein maximales Drehmoment anteilig auf mehrere Rastkörper verteilen und je Rastkörper lässt sich durch Einstellen der Hebelarmlänge eine betreffende zu überwindende Auslenkkraft für den Rastkörper und damit ein maximales Drehmoment auf eine Werkzeugantriebswelle einstellen. Dennoch wird ein in axialer Richtung sehr geringer Bauraum hierfür verbraucht. Die Drehmomentvorwahl kann nahezu kraftlos erfolgen, indem die Hebelarmlänge variierbar ist, und zwar durch Verdrehen eines Stellelements, welches den Gelenkpunkt für eine jeweilige Blattfeder vorgibt, in Umfangsrichtung. Es muss also zur Einstellung des Drehmoments keine wesentliche Stellkraft überwunden werden, was sich für einen Benutzer als aufwendig und unangenehm oder zumindest unkomfortabel erweist. Es hat sich des Weiteren als vorteilhaft erwiesen, dass Blattfedern mit trapezförmiger Abwicklung verwendet werden, wobei zur Einstellung einer hohen Drehmomentbegrenzung der Gelenkpunkt der Blattfeder im Bereich großer Breite der trapezförmigen Federform zu liegen kommt.

Es erweist sich des Weiteren als vorteilhaft, wenn die Blattfeder radial außerhalb eines gehäusefesten Rings oder Flanschs angeordnet ist und zur Einstellung der Hebelarmlänge direkt gegen diesen drückbar ist. Dieser gehäusefeste Ring oder Flansch kann in vorteilhafter Weise in Umfangsrichtung durchgehend ausgebildet sein, jedoch Durchtrittsöffnungen für die Rastkörper aufweisen. Solchenfalls ist die Hohlwelle bei Durchtrieb auf eine Werkzeugantriebswelle oder -spindel mittels der Rastkörper mit dem gehäusefesten Ring oder Flansch gekoppelt, so dass die Planetenräder gegen die Innenverzahnung kämmend abrollen und eine Antriebswelle oder -spindel antreiben können.

Zur Drehmomenteinstellung erweist es sich als vorteilhaft, wenn radial außerhalb der Blattfedern ein Stellorgan vorgesehen ist. Es kann sich hierbei in vorteilhafter Weise um einen Stellring handeln, der einen Hals des Schraub- oder Bohrwerkzeuggeräts umgibt und gegenüber dem Gehäuse drehbar ist. Das Stellorgan oder der Stellring ist dann vorzugsweise direkt mit den Blattfedern gekoppelt; er drückt nach radial innen gegen die Blattfedern und gibt so deren Hebelarmlänge vor.

Hierfür erweist es sich als vorteilhaft, wenn das Stellorgan oder der Stellring mit einem nach radial innen vorstehenden Vorsprung auf eine jeweilige Blattfeder drückt.

Es erweist sich des Weiteren als vorteilhaft, wenn das Stellorgan in Umfangsrichtung um 50° bis 85°, insbesondere um 60° bis 75° verdrehbar ist. Das Stellorgan kann des Weiteren in vorteilhafter Weise über inkrementelle Rastpositionen verstellbar sein. Zwischen diesen Rastpositionen ist ein in vorteilhafter Weise durch eine geringfügige Kraft überwindbares Hemmnis vorgesehen. Dieser Ausführungsform wird vor einer Ausführungsform der Vorzug gegeben, wo durch Betätigung eines Entriegelungsorgans ein insbesondere formschlüssiger Hintergriff des Stellorgans in einer jeweiligen Rastposition beseitigt werden muss.

Das Stellorgan, insbesondere der Stellring, weist in vorteilhafter Weise ein nach radial außen erstrecktes und manuell greifbares Betätigungsmittel auf. Dieses Betätigungsmittel kann ein radial vorstehender Stift oder ein an sich beliebiger Vorsprung oder in vorteilhafter Weise eine mit einer Rutschhemmung versehene Grifffläche sein. Wenn das Stellorgan als Stellring ausgebildet ist, so erweist es sich als vorteilhaft, wenn das manuell greifbare Betätigungsmittel von einer leicht geriffelten Oberfläche des Stellrings gebildet ist.

Nach einer weiteren besonders vorteilhaften Ausführungsform des erfindungsgemäßen Werkzeuggeräts sind die Rastkörper in Vertiefungen des Hohlrads einrastbar, wobei eine jeweilige Vertiefung zu einer Seite von einer über den übrigen Außenumfang des Hohlrads hervorstehenden Erhöhung begrenzt ist. Diese Erhöhung ist in Umfangsrichtung derart orientiert, dass sie bei üblichem Rechtsantrieb der Antriebswelle gegen den Rastkörper drückt. Die Erhöhung begrenzt also diejenige Flanke der Vertiefung des Hohlrads, welche den Rastkörper bei Drehmomentüberschreitung nach radial außen verdrängt.

Als besonders vorteilhaft erweist es sich, wenn die Rastkörper zylindrisch ausgebildet sind, da solchenfalls im Gegensatz zur Verwendung von Rastkugeln eine linienförmige Lastübertragung anstelle einer Punktlastübertragung erreichbar ist, was die Verschleißbeanspruchung reduziert.

Weitere Merkmale, Einzelheiten und Vorteile der Erfindung ergeben sich aus den beigefügten Patentansprüchen und der zeichnerischen Darstellung und nachfolgenden Beschreibung einer bevorzugten Ausführungsform der Erfindung. In der Zeichnung zeigt:

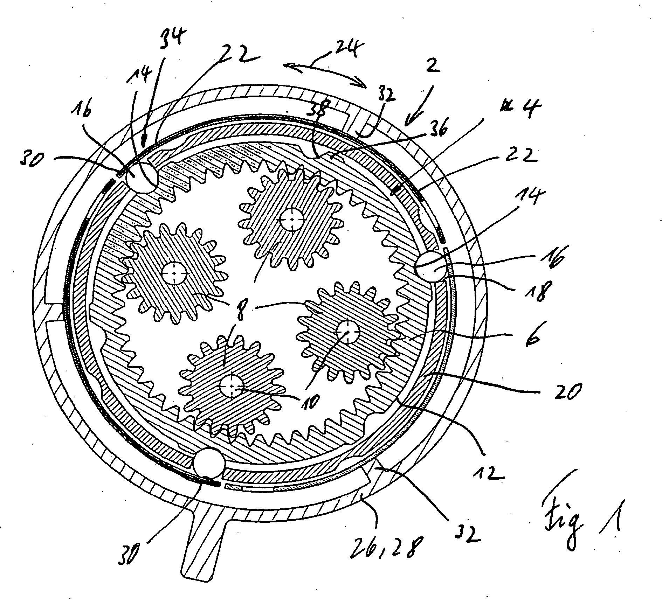

- Figur 1: eine Schnittansicht eines Getriebebereichs eines erfindungsgemäßen Elektrowerkzeuggeräts mit senkrecht zur Antriebswelle verlaufender Schnittebene;
- Figur 2: eine perspektivische Ansicht des Getriebereichs nach Figur 1, und
- Figur 3: eine trapezförmige Blattfeder des Getriebebereichs nach Figuren 1 und 2.

Die Figuren zeigen in schematischer Andeutung einen Getriebebereich eines elektromotorisch angetriebenen Schraubwerkzeuggeräts oder Bohrschraubers. Der Getriebebereich umfasst ein Planetengetriebe 4 mit einem Hohlrad 6 und mit damit kämmenden Planetenrädern 8, die vorzugsweise über ein gemeinsames nicht dargestelltes Ritzel des elektromotorischen Antriebs rotierend antreibbar sind. Die Achsen 10 der Planetenräder 8 sind beispielsweise über einen scheibenförmigen Körper mit einer ein Werkzeug oder ein Werkzeugfutter antreibenden Antriebswelle (nicht dargestellt) antriebsverbunden. Wenn also die Getrieberäder 8 gegen die Innenverzahnung des Hohlrads 6 abrollen, bewegen sich die Achsen 10 auf einer Kreislinie und treiben so den insbesondere scheibenförmigen Kopplungskörper und damit die Antriebswelle an. Dies ist grundsätzlich bekannt und daher nicht näher dargestellt. Während dieses Antriebs ist das Hohlrad 6 gehäusefest arretiert. Hierfür weist das Hohlrad 6 an seinem Außenumfang 12 Vertiefungen 14 auf, in welche vorzugsweise zylinderförmige Rastkörper 16 eingreifen. Die Rastkörper 16 durchragen des Weiteren radiale Durchtrittsöffnungen 18 in einem gehäusefesten Ring oder Flansch, der das Hohlrad 6 konzentrisch radial außen umgibt. In der in den Figuren dargestellten gehäusefesten Fixierung des Hohlrads ist das Hohlrad über die mehreren, vorzugsweise drei Rastkörper 16 an den gehäusefesten Ring oder Flansch 20 gekoppelt. Die Rastkörper 16 sind mittels Blattfedern 22 nach radial innen vorgespannt. Diese Blattfedern 22 sind in Umfangsrichtung 24, also konzentrisch zu dem gehäusefesten Ring oder Flansch 20 und zu dem Hohlrad 6 erstreckt. Sie sind durch geeignete in der Zeichnung nicht dargestellte Mittel in Umfangsrichtung 24, aber auch in radialer Richtung verliersicher zwischen dem gehäusefesten Ring oder Flansch 20 und einem radial außerhalb der Blattfedern wiederum konzentrisch angeordneten Stellorgan 26, im dargestellten Fall in Form eines zylindrischen Stellrings 28 angeordnet. Jede der drei Blattfedern 22 liegt mit einem Ende 30 von radial außen gegen einen Rastkörper 16 an und drückt diesen nach radial innen. Das erwähnte Stellorgan 26 drückt dabei mit einem nach radial innen vorstehenden Vorsprung 32 gegen die jeweilige Blattfeder 22 und fixiert somit den Gelenkpunkt, so dass sich ein wirksamer Federarm zwischen diesem Gelenkpunkt und dem freien Ende 30 der jeweiligen Blattfeder 22 ergibt. Die Hebelarmlänge lässt sich durch Verstellen des Stellorgans 26 in Umfangsrichtung 24 variieren. Je näher das Stellorgan 26 bzw. dessen Vorsprung 32 in Richtung auf das freie Ende 30 einer jeweiligen Blattfeder 22 verstellt wird, desto kürzer ist die wirksame Hebelarmlänge der Blattfedern 22 und desto höher ist die nach radial innen gerichtete Kraft auf den jeweiligen Rastkörper 16. Die vorstehenden Komponenten bilden somit eine Drehmomenteinstell- oder -begrenzungseinrichtung 34. Wenn der jeweilige Vorsprung 32 radial außerhalb des jeweiligen Rastkörpers 16 zu liegen kommt, so ist die Drehmomentbegrenzung quasi deaktiviert, da die Rastkörper 16 solchenfalls nicht aus der Kopplungsstellung freikommen können.

Vorteilhafter Weise ist die Drehmomenteinstelleinrichtung 34 derart konzipiert, dass die Drehmomentbegrenzung kontinuierlich oder in Stufen von beispielsweise 0,5 Nm als geringster Drehmomentbegrenzung bis 8 Nm als größter Drehmomentbegrenzung variiert werden kann. In vorteilhafter Weise kann auch ein Bohrbetrieb mit einer Überlastsicherung von wenigstens 40 Nm realisiert werden.

Eine jeweilige Vertiefung 14 ist zu einer Seite hin begrenzt von einer Erhöhung 36, die radial geringfügig über den sonstigen Außenumfang des Hohlrads 6 übersteht. Auf diese Weise wird diejenige Flanke 38, welche gegen den betreffenden Rastkörper 16 anliegt, vergrößert, so dass eine gleichmäßige Krafteinleitung in den Rastkörper bei geringerer Oberflächenbeanspruchung und geringerem Verschleiß möglich ist.

Beim Betrieb des erfindungsgemäßen Schraub- und/oder Bohrwerkzeuggeräts erfolgt, wie bereits erwähnt, ein gleichsinniger Antrieb der Planetenräder 8 über ein nicht dargestelltes Ritzel des Elektromotors. Die Planetenräder 8 rollen dabei über die Innenverzahnung des Hohlrads 6 ab, wobei das Hohlrad 6 durch die Rastkörper 16 gehäusefest an dem gehäusefesten Ring oder Flansch 20 unverdrehbar gestellt ist. Somit wird die Umdrehung der Achsen 10 der Planetenräder über ein nicht dargestelltes insbesondere scheibenförmiges Kopplungselement auf eine Antriebswelle für ein Werkzeug oder ein Werkzeugfutter übertragen. Hierbei liegt das Hohlrad bzw. dessen die jeweiligen Vertiefungen 14 für die Rastkörper 16 begrenzenden Flanken belastend gegen den jeweiligen Rastkörper 16 an und es resultiert eine den jeweiligen Rastkörper 16 nach radial außen drängende Kraft. Solange diese Kraft geringer ist als die von den Blattfedern 22 auf die Rastkörper 16 nach radial innen ausgeübte Kraft, bleibt das Hohlrad 6 gegenüber dem gehäusefesten Ring oder Flansch 20 unverdrehbar. Wird die durch die Blattfedern 22 ausgeübte Gegenkraft jedoch überschritten, so wird der Rastkörper 16 aus der Vertiefung 14 nach radial außen gedrückt und das Hohlrad 6 wird gegenüber dem gehäusefesten Ring oder Flansch 20 verdreht, bis es in die nächstfolgende Vertiefung 14 unter dem Druck der Blattfeder 22 eingreift oder auch diese Vertiefung überspringt. Auf diese Weise wird eine Drehmomentbegrenzung, also eine Begrenzung des über das Werkzeug auf das Werkstück ausgeübten Drehmoments erreicht.

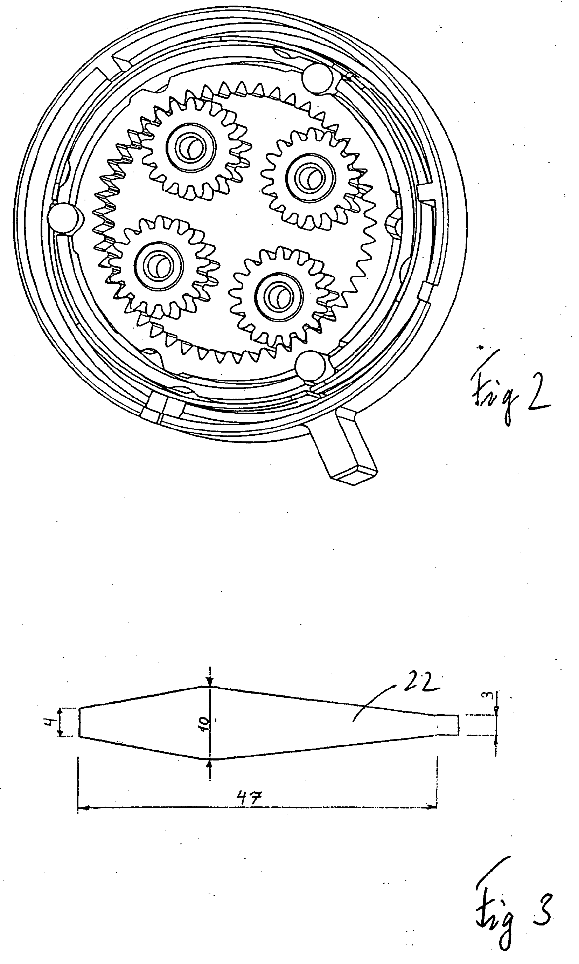

Eine beispielhafte trapezförmige Blattfeder 22 zeigt Figur 3.

## Patentansprüche

1. Elektromotorisch angetriebenes Schraub- oder Bohrwerkzeuggerät mit Planetengetriebe (4), umfassend ein Hohlrad (6) und mit dem Hohlrad kämmende Planetenräder (8), wobei die Planetenräder angetrieben sind und über die Achsen (10) der gegenüber dem Hohlrad abrollenden Planetenräder eine Antriebswelle antreibbar ist, und eine Drehmomenteinstelleinrichtung (34), wobei das Hohlrad (6) über nach radial innen federvorgespannte Rastkörper (16) gehäusefest arretierbar ist und die Rastkörper (16) bei Überschreiten eines Abschaltdrehmoments nach radial außen verdrängbar sind, so dass das Hohlrad (6) gegenüber dem Gehäuse drehbar ist und die Antriebswelle nicht mehr angetrieben wird, wobei in Umfangsrichtung (24) des Hohlrads (6) erstreckte Blattfedern (22) vorgesehen sind, deren Hebelarmlänge zur Erzeugung verschiedener Biegekräfte, die auf einen betreffenden Rastkörper (16) einwirken, in Umfangsrichtung einstellbar ist,**dadurch gekennzeichnet, dass** die Blattfeder (22) eine trapezförmige Abwicklung aufweist.

2. Schraub- oder Bohrwerkzeuggerät nach Anspruch 1, **dadurch gekennzeichnet, dass** die Blattfedern (22) radial außerhalb eines gehäusefesten Rings oder Flanschs (20) angeordnet und zur Einstellung der Hebelarmlänge direkt gegen diesen drückbar sind.

3. Schraub- oder Bohrwerkzeuggerät nach Anspruch 1 oder 2, **dadurch gekennzeichnet, dass** radial außerhalb der Blattfedern (22) ein Stellorgan (26) vorgesehen und gegenüber dem Gehäuse drehbar ist.

4. Schraub- oder Bohrwerkzeuggerät nach Anspruch 3, **dadurch gekennzeichnet, dass** das Stellorgan (26) ein Stellring (28) ist.

5. Schraub- oder Bohrwerkzeuggerät nach Anspruch 3 oder 4, **dadurch gekennzeichnet, dass** das Stellorgan (26) nach radial innen gegen die Blattfedern (22) drückt und so deren Hebelarmlänge vorgibt.

6. Schraub- oder Bohrwerkzeuggerät nach Anspruch 3, 4 oder 5, **dadurch gekennzeichnet, dass** das Stellorgan (26) mit einem nach radial innen vorstehenden Vorsprung (32) auf eine jeweilige Blattfeder (22) drückt.

7. Schraub- oder Bohrwerkzeuggerät nach einem der Ansprüche 3 - 6, **dadurch gekennzeichnet, dass** das Stellorgan (26) in Umfangsrichtung (24) um 50° - 85° verdrehbar ist.

8. Schraub- oder Bohrwerkzeuggerät nach einem der Ansprüche 3 - 7, **dadurch gekennzeichnet, dass** das Stellorgan (26) über inkrementelle Rastpositionen verstellbar ist.

9. Schraub- oder Bohrwerkzeuggerät nach einem der Ansprüche 3 - 8, **dadurch gekennzeichnet, dass** das Stellorgan (26) ein nach radial außen erstrecktes und manuell greifbares Betätigungsmittel aufweist.

10. Schraub- oder Bohrwerkzeuggerät nach einem der vorstehenden Ansprüche, **dadurch gekennzeichnet, dass** die Rastkörper (16) in Vertiefungen (14) des Hohlrads (6) einrastbar sind, wobei eine jeweilige Vertiefung (14) zu einer Seite hin von einer über den Außenumfang des Hohlrads (6) hervorstehenden Erhöhung (36) begrenzt ist.

11. Schraub- oder Bohrwerkzeuggerät nach einem der vorstehenden Ansprüche, **dadurch gekennzeichnet, dass** die Rastkörper (16) zylindrisch ausgebildet sind.

## Claims

1. Screwing or drilling tool which is driven by an electric motor and has a planetary gear set (4), comprising a ring gear (6), planet gears (8) which mesh with said ring gear, said planet gears being driven, and a drive shaft being drivable by the shafts (10) of the planet gears which roll relative to said ring gear and comprising a torque adjustment device (34), the ring gear (6) being lockable relative to the housing via radially inwardly pretensioned locking bodies (16), and the locking bodies (16) being displaceable outwards in a radial direction when a switch-off torque has been exceeded, so that the ring gear (6) can rotate relative to the housing and the drive shaft is no longer driven, leaf springs (22) being provided which extend in the peripheral direction (24) of the ring gear (6) and of which the lever arm length can be adjusted in the peripheral direction to produce different bending forces acting on a respective locking body (16), **characterised in that** the leaf spring (22) has a trapezium-shaped development.

2. Screwing or drilling tool according to claim 1, **characterised in that** the leaf springs (22) are arranged radially outside a ring or flange (20), which is fixed relative to the housing, and against which said leaf springs can be pressed directly in order to adjust the lever arm length.

3. Screwing or drilling tool according to either claim 1 or claim 2, **characterised in that** a control element (26) is disposed radially outside the leaf springs (22) and can rotate relative to the housing.

4. Screwing or drilling tool according to claim 3, **characterised in that** the control element (26) is an adjusting ring (28).

5. Screwing or drilling tool according to either claim 3 or claim 4, **characterised in that** the control element (26) presses radially inwards against the leaf springs (22) to define the lever arm length thereof.

6. Screwing or drilling tool according to any one of claims 3, 4 or 5, **characterised in that** the control element (26) has a radially inwardly protruding projection (32) which presses against a respective leaf spring (22).

7. Screwing or drilling tool according to any one of claims 3 to 6, **characterised in that** the control element (26) can be rotated by 50° to 85° in the peripheral direction (24).

8. Screwing or drilling tool according to any one of claims 3 to 7, **characterised in that** the control element (26) can be adjusted via incremental locking positions.

9. Screwing or drilling tool according to any one of claims 3 to 8, **characterised in that** the control element (26) has an actuation means which extends radially outwards and can be held manually.

10. Screwing or drilling tool according to any one of the preceding claims, **characterised in that** the locking bodies (16) can lock into depressions (14) in the ring gear (6), each depression (14) being delimited at one side by an elevation (36) which projects past an outer circumference of the ring gear (6).

11. Screwing or drilling tool according to any one of the preceding claims, **characterised in that** the locking bodies (16) are formed so as to be cylindrical.

## Revendications

1. Outil de vissage ou outil de perçage commandé par moteur électrique, avec un engrenage planétaire (4), comprenant une couronne de train planétaire (6) et des roues planétaires (8) s'engrenant avec la couronne de train planétaire, les roues planétaires étant entraînées, et un arbre d'entraînement pouvant être entraîné par les axes (10) des roues planétaires tournant par rapport à la couronne de train planétaire, et un dispositif de réglage de couple de rotation (34), la couronne de train planétaire (6) pouvant être verrouillée sur le boîtier par l'intermédiaire de corps d'arrêt (16) précontraints par ressort radialement vers l'intérieur et les corps d'arrêt (16) pouvant être repoussés radialement vers l'extérieur lorsqu'un couple de rotation de coupure est dépassé, de sorte que la couronne de train planétaire (6) peut tourner par rapport au boîtier et l'arbre d'entraînement n'est plus entraîné, dans lequel des ressorts à lames (22) s'étendant dans la direction circonférentielle (24) de la couronne de train planétaire (6) sont prévus dont la longueur de bras de levier pour la génération de différents efforts de flexion qui agissent sur un corps d'arrêt particulier (16) est réglable dans la direction circonférentielle, **caractérisé en ce que** le ressort à lames (22) présente un développement trapézoïdal.

2. Outil de vissage ou de perçage selon la revendication 1, **caractérisé en ce que** les ressorts à lames (22) sont disposés radialement à l'extérieur d'une bague ou bride (2) fixée au boîtier et peuvent être poussés directement contre celle-ci pour régler la longueur de bras de levier.

3. Outil de vissage ou de perçage selon la revendication 1 ou 2, **caractérisé en ce que** radialement à l'extérieur des ressorts à lames (22), un actionneur (26) est prévu et peut tourner par rapport au boîtier.

4. Outil de vissage ou de perçage selon la revendication 3, **caractérisé en ce que** l'actionneur (26) est une bague de réglage (28).

5. Outil de vissage ou de perçage selon la revendication 3 ou 4, **caractérisé en ce que** l'actionneur (26) pousse radialement vers l'intérieur contre les ressorts à lames (22) et prédéfinit ainsi leur longueur de bras de levier.

6. Outil de vissage ou de perçage selon la revendication 3, 4 ou 5, **caractérisé en ce que** l'actionneur (26) appuie avec une saillie (32) dépassant radialement vers l'intérieur sur un ressort à lames respectif (22).

7. Outil de vissage ou de perçage selon l'une quelconque des revendications 3 à 6, **caractérisé en ce que** l'actionneur (26) peut tourner dans la direction circonférentielle (24) de 50° à 85°.

8. Outil de vissage ou de perçage selon l'une quelconque des revendications 3 à 7, **caractérisé en ce que** l'actionneur (26) est réglable par l'intermédiaire de positions d'arrêt incrémentielles.

9. Outil de vissage ou de perçage selon l'une quelconque des revendications 3 à 8, **caractérisé en ce que** l'actionneur (26) présente un moyen d'actionnement s'étendant radialement à l'extérieur et pouvant être saisi par la main.

10. Outil de vissage ou de perçage selon l'une quelconque des revendications précédentes, **caractérisé en ce que** les corps d'arrêt (16) peuvent s'enclencher dans des enfoncements (14) de la couronne de train planétaire (6), dans lequel chaque enfoncement respectif (14) est limité vers un côté par un relief (36) faisant saillie au-delà de la circonférence extérieure de la couronne de train planétaire (6).

11. Outil de vissage ou de perçage selon l'une quelconque des revendications précédentes, **caractérisé en ce que** les corps d'arrêt (16) sont réalisés de façon cylindrique.
